# EUROPEAN PATENT SPECIFICATION

(11) **EP 4 370 981 B1**
(45) Date of publication and mention of the grant of the patent: **18.06.2025**
(21) Application number: 22769914.7
(22) Date of filing: 26.08.2022
(51) Int. Cl.: G05B 19/042, G06N 20/00, G06Q 10/0631

(54) **METHOD AND SYSTEM FOR GENERATING USER SPECIFIC ENGINEERING PROGRAMS IN A MULTI-USER ENGINEERING ENVIRONMENT**
VERFAHREN UND SYSTEM ZUR GENERIERUNG BENUTZERSPEZIFISCHER ENGINEERINGPROGRAMME IN EINER MEHRNUTZER-ENGINEERING-UMGEBUNG
PROCÉDÉ ET SYSTÈME DE GÉNÉRATION DE PROGRAMMES D'INGÉNIERIE SPÉCIFIQUES À L'UTILISATEUR DANS UN ENVIRONNEMENT D'INGÉNIERIE MULTI-UTILISATEURS

(30) Priority: 27.08.2021 EP 21193522
(43) Date of publication of application: 22.05.2024
(73) Proprietor: Siemens Aktiengesellschaft, 80333 München (DE)
(72) Inventor: ORUGANTI, Srivathsa Simha, 56100 Bangalore (IN)
(74) Representative: Isarpatent
(86) International application number: PCT/EP2022/073802
(87) International publication number: WO 2023/025945

(56) References cited:
- EP-A1- 3 009 900
- US-A1- 2018 088 564
- US-A1- 2018 365 025

## Description

The present invention relates to a field of cognitive engineneering, and more particularly relates to a method and system for generating user specific engineering programs for each user in a multi-user engineering environment.

In an engineering environment, a plurality of users may work on an engineering project via a plurality of local sessions. The plurality of users may contribute to the engineering project by executing a plurality of user actions in the engineering project during their respective local sessions. The plurality of user actions are engineering actions which are performed for development, testing, and maintenance of the engineering project. Examples of the plurality of user actions may include configuring hardware, configuring human machine interfaces, modifying code, modifying configuration settings, and adjusting a plurality of parameters associated with the engineering project. Each of the plurality of users may be engaged in a plurality of roles in the engineering project. Examples of the plurality of roles may include a coder role, a tester role, a commissioning engineer role, and an architect role.

In some cases, the plurality of users may lack the necessary experience required to determine an optimal sequence of user actions which is to be performed in a given situation in the engineering environment. Thus, conventional systems employ a machine learning model to generate and display recommentions for the plurality of users to simplify engineering effort for the plurality of users. The displayed one or more recommendations comprises a list of user actions which are recommended to be executed by the plurality of users in the engineering environment. The machine learning model is trained using the plurality of user actions as inputs, and the machine learning model may generate one or more user action recommendations for the plurality of users as output.

However, prior to training the machine learning model, conventional systems fail to classify each user action of the plurality of user actions based on a role of a user who has perfomed the particular user action. Further, the machine learning model fail to identify a scope of operations performed by the user in the engineering environment, prior to generating the one or more user action recommendations for the user. As a result, the generated user action recommendations may be not be personalized for the user. Thus, the generated one or more user action recommendation may be irrelevant for the user and a probability of the user accepting the one or more user action recommendations is low. The machine learning model fails to generate user action recommendations which are personalized for each user of the plurality of users. Further a total number of user actions, in the plurality of user actions received by the engineering environment, may be gigantic. As a result, a task of gathering the gigantic number of user actions, and training the machine learning model using the gigantic number of user actions is a tedious and time consuming task.

US 2018/088564 A1 relates workflow tracking and identification using an industrial monitoring system.

EP 3 009 900 A1 relates to dynamic recommendation of elements suitable for use in an engineering configuration.

US 2018365025 A1 relates to systems and method for adaptative user interfaces.

In light of above, there exists a need for an efficient method and system for generating user specific engineering programs in a multi-user engineering environment.

Therefore, it is an object of the present invention to provide a method and system for generating user specific engineering programs in a multi-user engineering environment.

The object of the invention is achieved by a method of generating user specific engineering programs for each user in a multi-user engineering environment as defined in claim 1

According to the invention, the method comprises generating, by a processing unit, a plurality of user profiles comprising a plurality of users. The plurality of users are in the multi-user engineering environment. Examples of the multi-user engineering environment comprises, but is not limited to an engineering platform, an integrated code development platform, a manufacturing plant, and a control system of a power generation plant. The plurality of users work in the multi-user engineering environment by executing a plurality of user actions in the multi-user engineering environment. Each user action of the plurality of user actions are engineering actions performed by the plurality of users to perform development, maintenance and testing of an engineering project in the multi-user engineering environment. Examples of the plurality of user actions comprises configuring hardware, configuring human machine interfaces, modifying code, modifying configuration settings, and adjusting a plurality of parameters associated with an engineering project in the multi-user engineering environment. The plurality of user profiles is generated based on the analysis of a plurality of user actions performed by the plurality of users in the multi-user engineering environment. In one example, the plurality of user profiles are generated by application of an unsupervised learning algorithm on the plurality of user actions. Examples of the unsupervised learning algorithm includes but is not limited to a hierarchal clustering algorithm and a K-means clustering algorithm.

In one example, the processing unit is configured to use the unsupervised learning algorithm to identify a plurality of patterns in the plurality of user actions. In one example, the plurality of patterns comprises patterns which are based on a sequence in which the plurality of user actions are executed by the plurality of users. In another example, the plurality of patterns comprises patterns based on causal interrelationships between user actions of the plurality of user actions. In yet another example, the plurality of patterns comprises patterns based on relationships between each user action of the plurality of user actions and a role and an access right of a user of the plurality of users, who has executed the particular user action.

Further, the processing unit is configured to classify the plurality of user actions into a plurality of groups, based on the identification of the plurality of patterns in the plurality of user actions. The processing unit is configured to map each group of the plurality of groups to a specific user profile of the plurality of user profiles. Further, the processing unit is configured to determine whether a user action performed by a user of the plurality of users, belong to a particular group of the plurality of groups of user actions. If the user action is determined to belong to a particular group of the plurality of groups, then the user is assigned to a user profile, in the plurality of user profiles, which is mapped to the particular group.

Advantageously, the plurality of user profiles is not generated based on a name, age, or designation of each of the plurality of users. Instead, the plurality of user profiles is generated automatically based on the analysis of engineering actions performed by the plurality of users in the multi-user engineering environment.

Thus, a need for storing confidential information of the plurality of users is eradicated. Examples of the confidential information includes a name, an age, a password, and a date of birth of the user. Advantageously, cybersecurity associateed with the multi-user engineering environment is improved. Further, since the plurality of user profiles of the plurality of users are automatically generated, time and manual labor usually consumed for performing system administration of the multi-user engineering environment is reduced. Advantageously, labor involved in manually generating user profiles is eliminated.

The method further comprises training, by the processing unit, an artificial intelligence model to generate a workflow which is specific to each user profile of the plurality of user profiles. The artificial intelligence model is trained based on the analysis of the plurality of user actions of the plurality of users. Examples of the artificial intelligence model includes but is not limited to a linear regression based model, a logistic regression based model, and a decision tree based model. If a particular group of the plurality of groups is mapped to a particular user profile of the plurality of user profiles, then the artificial intelligence model is trained to generate the workflow specific to the particular user profile by analysis of user actions belonging to the particular group of the plurality of groups. Thus, each workflow generated by the artificial intelligence model is a result of training the artificial intelligence model with a specific group of user actions that is mapped to a specific user profile of the plurality of user profiles. Thus, each workflow generated by the artificial intelligence model is specifically customized for each user profile of the plurality of user profiles. Advantageously, a workflow generated by the artificial intelligence model, for a user profile comprises a list of user actions which are relevant to the user profile. As a result, a probability of a user, of the user profile, accepting the generated workflow is high. Further, advantageously, inputs used to train the artificial intelligence module is refined and categorized to the plurality of groups.

The method further comprises detecting, by the processing unit from a user, at least one user action performed by the user in the multi-user engineering environment. The at least one user action is an engineering action performed by the us-er in the multi-user engineering environment. The engineering action is executed by the user to contribute to a development, a maintenance, or testing of an engineering project in the multi-user engineering environment. Examples of the engineering action includes, but is not limited to configuring hardware settings of one or more devices in the multi-user engineering environment, generating computer code, amending code, modifying configuration settings of one or more engineering objects and modifying one or more parameters associated with the engineering project in the multi-user engineering environment. The method further comprises analyzing the at least one user action to determine a pattern associated with the at least one user action. In one example, the determined pattern is based on causal interrelationships between the at least one user action and one or more other user actions performed by the user.

In another example, the determined pattern is based on relationships between the at least one user action and the role and the access right of the user in the multi-user engineering environment. The method comprises determining, by the processing unit, whether the pattern associated with the at least one user action is similar to at least one of the plurality of patterns determined from the plurality of user actions. Further, the method comprises matching, by the processing unit, the pattern to at least one group of the plurality of groups of user actions.

Further, the method comprises determining, by the processing unit, a user profile, of the plurality of user profiles, which corresponds to the at least one group of the plurality of groups. In other words, the method comprises determining, by the processing unit, a user profile for the us-er, from the generated plurality of user profiles based on an analysis of the detected at least one user action. In one example, the at least one user action is analyzed by an application of the unsupervised learning algorithm on the at least one user action. Advantageously, the user is matched to the user profile of the plurality of user profiles, without having to receive confidential data such as passwords, gestures, and patterns from the user. Instead, the user is determined to have the user profile based on an analysis of the at least one user action (engineering action) executed by the user in the multi-user engineering environment. Further, the user is determined to be of the user profile based on a similarity of the pattern associated with the at least one user action, to at least one of the plurality of patterns. Thus, the user is assigned the user profile even if the at least one user action is absent in the plurality of user actions received from the plurality of users. Thus, a scalability of the multi-user engineering environment is improved.

The method further comprises generating, by the processing unit, a workflow which is specific to the user based on the determined user profile and an application of the generated artificial intelligence model on the detected at least one user action. The workflow comprises a sequence of user actions present in the at least one group of the plurality of groups of user actions. Advantageously, the workflow is generated based on the at least one group of user actions, which is associated with the determined user profile of the user. Thus, the workflow is personalized for the user.

In a preferred embodiment, the method further comprises receiving, by the processing unit, a user request to execute the generated workflow in the multi-user engineering environment. The method further comprises executing, by the processing unit, the generated workflow in the multi-user engineering environment based on the received user request. The method further comprises dynamically generating an engineering program for user in an automation system based on the execution of the generated workflow. Advantageously, the processing unit is configured to automatically execute the generated workflow to generate the engineering program, thereby reducing an engineering effort of the user. Further, the engineering program is generated based on the analysis of the plurality of user actions of the plurality of users and the at least one user action of the user. Thus, the generated engineering program is tailor made for the user of the multi-user engineering environment.

In a preferred embodiment, the method further comprises determining, by the processing unit, whether each user action of a set of user actions, in the plurality of user actions, are of an identical pattern in the plurality of patterns. The method further comprises determining, by the processing unit, from the plurality of users, two or more users associated with the determined set of user actions. The determined two or more users of the plurality of users have performed the set of user actions. The method further comprises grouping, by the processing unit, the determined two or more users into another user profile of the plurality of user profiles, based on the determination that each user action of the set of user actions are of the identical pattern of the plurality of patterns.

In a preferred embodiment, the method further comprises categorizing, by the processing unit, the set of user actions into a group of user actions, based on the determination that that each user action of the set of user actions are of the identical pattern of the plurality of patterns. The method further comprises training, by the processing unit, the artificial intelligence model to generate workflows which are specific to every user of the user profile. The artificial intelligence model is trained by application of the unsupervised learning algorithm on the set of user actions. The generated workflows comprise a sequence of user actions present in the cluster of user actions.

In the preferred embodiment, the method further comprises extracting, by the processing unit, a user action from the generated workflow. The method further comprises determining, by the processing unit, a count of user actions, in the plurality of user actions, which are similar to the extracted user action. The method comprises determining, by the processing unit, that the determined count of user actions is lesser than a threshold. The method further comprises removing, by the processing unit, the user action from the generated workflow, based on the determination that the determined count of user actions is lesser than the threshold. Advantageously, the user action, which is dissimilar to other user actions in the plurality of user actions, is removed from the generated workflow.

In the preferred embodiment, the method comprises receiving, by the processing unit, a user action performed by the user in the multi-user engineering environment. The method further comprises determining, by the processing unit, a count of user actions in the plurality of user actions, which are similar to the user action. The method further comprises comparing, by the processing unit, the determined count of user actions, with a threshold. The method comprises determining, by the processing unit, that the user action is an outlier based on the comparison. The method comprises training, by the processing unit, the artificial intelligence model to generate another workflow for the determined user profile of the user. The artificial intelligence model is trained based on the determination that the user action is the outlier, and the generated another workflow does not comprise the user action. Advantageously, the artificial intelligence model is trained to take into account outlier user actions.

In the preferred embodiment, the method further comprises receiving, by the processing unit, a user action which is executed by the user in the multi-user engineering environment. The method further comprises determining, by the processing unit, whether an execution of the user action is successful, based on an analysis of one or more key performance indicators in the multi-user engineering environment. The method further comprises training, by the processing unit, the artificial intelligent model to generate another workflow for the determined user profile of the user. The artificial intelligence model is trained based on the determination that the execution of the user action is successful.

In yet another preferred embodiment, a method of generating user specific engineering programs in a multi-user engineering environment comprises receiving, by a processing unit, a plurality of user actions performed by a plurality of users in the multi-user engineering environment. The method further comprises determining, by the processing unit, a plurality of clusters of user actions from the plurality of user actions based on an application of an unsupervised learning algorithm on the plurality of user actions. Each cluster of user actions in the plurality of clusters of user actions represent a specific logical workflow associated with the plurality of users. The method further comprises generating, by the processing unit, a plurality of user profiles comprising the plurality of users, based on an analysis of the plurality of clusters of user actions. Each user profile of the plurality of user profiles is associated with at least one cluster of user actions of the plurality of clusters of user actions. The method comprises training, by the processing unit, an artificial intelligence model to generate a workflow which is specific to each user profile of the plurality of user profiles, based on the analysis of the plurality of clusters of user actions of the plurality of users The workflow generated for each user profile of the plurality of user profiles comprises at least one cluster of user actions associated with the particular user profile. The method comprises generating, by the processing unit, the workflow for each user profile of the plurality of user profiles based on the application of the artificial intelligence model on the plurality of user actions.

The object of the present invention is also achieved by an engineering system for generation of workflows which are specific to each user of a plurality of users in a multi-user engineering environment. The engineering system comprises one or more processing unit and a memory coupled to the processor. The memory comprises an automation module stored in the form of machine-readable instructions executable by the processor. The automation module is configured for performing the method as described above.

The object of the present invention is also achieved by an engineering environment. The engineering environment comprising an engineering system, a technical installation comprising one or more physical components and one or more client devices communicatively coupled to the engineering system and the technical installation. The engineering system is configured to perform the above described method steps.

The object of the present invention is also achieved by a computer-program product having machine-readable instructions stored therein, that when executed by one or more processing unit, cause the one or more processing unit to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of a multi-user engineering environment capable of generating user specific engineering programs in the multi-user engineering environment, according to an embodiment of the present invention;
- FIG 2: is a block diagram of an engineering system, such as those shown in FIG 1, in which an embodiment of the present invention can be implemented;
- FIG 3A-E: is a process flowchart illustrating an exemplary method of generating user specific engineering programs in the multi-user engineering environment, according to an embodiment of the present invention; and
- FIG 4: is a process flowchart illustrating an exemplary method of generating user specific engineering programs in the multi-user engineering environment, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

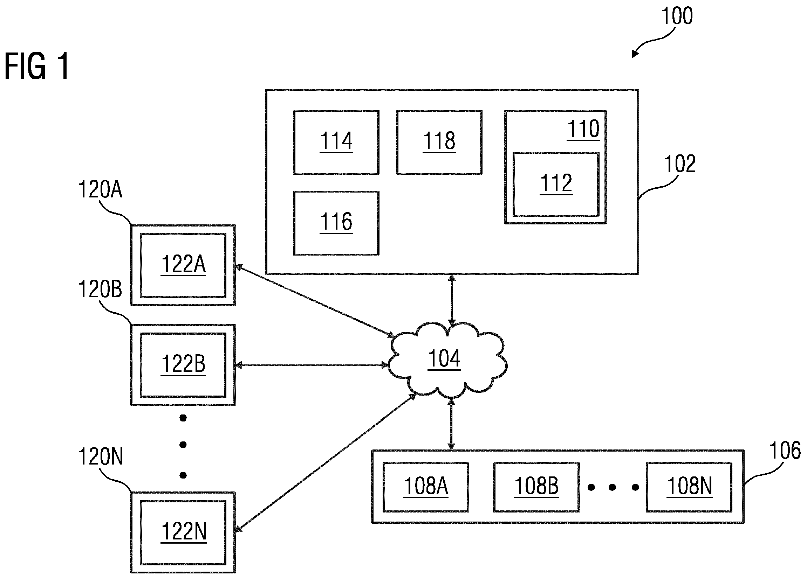

FIG 1 is a block diagram of an engineering environment 100 capable of generating engineering programs, according to an embodiment of the present invention. In FIG 1, the engineering environment 100 includes an engineering system 102, a user profile database 106 one or more client devices 120A-N. As used herein, "engineering environment" refers to a processing environment comprising configurable computing physical and logical resources, for example, networks, servers, storage, applications, services, etc., and data distributed over a platform, such as cloud computing platform. The engineering environment 100 is a multi-user engineering environment which hosts a plurality of users. The engineering environment 100 provides on-demand network access to a shared pool of the configurable computing physical and logical resources. The engineering system 102 is communicatively connected to the technical installation 106 via the network 104 (such as Local Area Network (LAN), Wide Area Network (WAN), Wi-Fi, Internet, any short range or wide range communication). The engineering system 102 is also connected to the one or more client devices 120A-N via the network 104. The engineering environment 100 is configured to generate a plurality of engineering programs for for use in an automation system in a technical installation. The technical installation may be at least one of a manufacturing plant, an industrial power plant, or an industrial processing plant.

The engineering system 102 is connected to one or more engineering objects in the technical installation via the network 104. The one or more engineering objects (not shown) may include servers, robots, switches, automation devices, programmable logic controllers (PLC)s, human machine interfaces (HMIs), motors, valves, pumps, actuators, sensors and other industrial equipment(s). The one or more engineering objects may be connected to each other or several other components (not shown in FIG 1) via physical connections. The physical connections may be through wiring between the one or more engineering objects. Alternatively, the one or more engineering objects may also be connected via non-physical connections (such as Internet of Things (IOT)) and 5G networks.

The client devices 120A-N may be a desktop computer, laptop computer, tablet, smart phone and the like. Each of the client devices 120A-N is provided with an engineering tool 122A-N for enabling the plurality of users to perform a plurality of user actions in the engineering environment 100 respectively. The plurality of user actions are engineering actions which are performed for development, testing, and maintenance of an engineering project in the engineering system 102. Examples of the plurality of user actions may include configuring hardware, configuring human machine interfaces, modifying code, modifying configuration settings, and adjusting a plurality of parameters associated with the engineering project. Each of the plurality of users may be engaged in a plurality of roles in the engineering project. Examples of the plurality of roles may include a coder role, a tester role, a commissioning engineer role, and an architect role. The engineering project is a project involved in developement, maintenance, and testing of at least one of an engineering object of the technical installation, or an application which is to be deployed in the engineering object. The plurality of users can use the one or more client devices 120A-N to access the engineering system 102 and execute the plurlaity of user actions in the engineering environment 100. The client devices 120A-N can access cloud applications (such as providing performance visualization of the one or more engineering objects via a web browser). Throughout the specification, the terms "client device" and "user device" are used interchangeably.

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing a technical installation comprising the one or more engineering objects. The engineering system 102 may comprise a platform 110(such as a cloud computing platform), an automation module 112, a server 114 including hardware resources and an operating system (OS), a network interface 116 and a database 118. The network interface 116 enables communication between the engineering system 102, the technical installation, and the client device(s) 120A-N. The interface (such as cloud interface) (not shown in FIG 1) may allow the engineers at the one or more client device(s) 120A-N to access engineering project files stored at the engineering system 102 and perform one or more actions on the engineering project files as same instance. The server 114 may include one or more servers on which an operating system is installed. The server 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communicateon, etc. using the hardware resources and the operating system of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the client devices 120A-N to generate engineering programs. The platform 110 may further comprise an automation module 112 configured for generating engineering programs.

The user profile data base 106 stores the information relating to the plurlaity of users who work in the engineering environment 100. The user profile database 106 is, for example, a structured query language (SQL) data store or a not only SQL (NoSQL) data store. In an exemplary embodiment, the user profile database 106 may be configured as cloud-based database implemented in the engineering environment 100, where computing resources are delivered as a service over the platform 110. The user profile database 106, according to another embodiment of the present invention, is a location on a file system directly accessible by the automation module 112. The user profile database 106 comprises information associated with the plurality of users. The information associated with the plurality of users comprises at least one of a name, a role, an access right of the plurality of users. The user profile database 106 is further configured to store a plurality of user profiles 108A-N associated with the plurality of users.

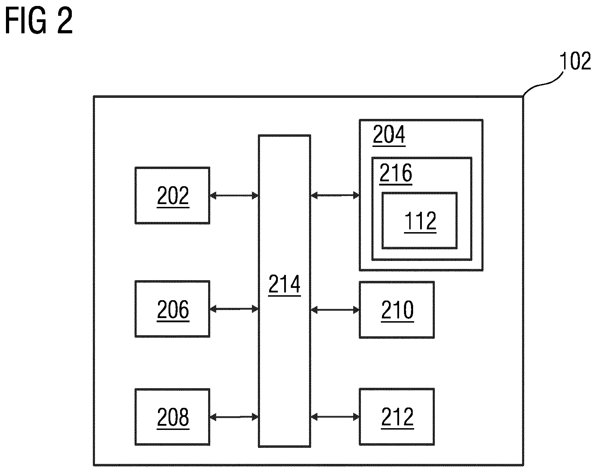

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processing unit 202.

When executed by the processing unit 202, the automation module 112 causes the processing unit 202 to generate engineering programs in the engineering system 102. In an embodyment, the automation module 112 causes the processing unit 202 to receive a request to generate a user specific workflow for each user in the plurality of users.

The processing unit 202 is configured to generate the plurality of user profiles 108A-N comprising the plurality of users of the engineering environment 100. In one example, the engineering environment 100 is a multi-user engineering environment which is configured to host at least one of an engineering platform, an integrated code development platform, a manufacturing plant, and a control system of a power generation plant. The plurality of users work in the multi-user engineering environment by executing a plurality of user actions in the multi-user engineering environment 100. Each us-er action of the plurality of user actions are engineering actions performed by the plurality of users to perform development, maintenance and testing of an engineering project in the multi-user engineering environment 100. The plurality of user actions are executed by the plurality of users via the plurality of client devices 120A-N. Examples of the plurality of user actions comprises configuring hardware, configuring human machine interfaces, modifying code, modifying configuration settings, and adjusting a plurality of parameters associated with an engineering project in the multi-user engineering environment. The plurality of user profiles 108A-N is generated based on the analysis of the plurality of user actions performed by the plurality of users in the multi-user engineering environment 100. In one example, the plurality of user profiles are generated by application of an unsupervised learning algorithm on the plurality of user actions. Examples of the unsupervised learning algorithm includes but is not limited to a hierarchal clustering algorithm and a K-means clustering algorithm.

In one example, the processing unit 202 is configured to use the unsupervised learning algorithm to identify a plurality of patterns in the plurality of user actions. In one example, the plurality of patterns comprises patterns which are based on a sequence in which the plurality of user actions are executed by the plurality of users. In another example, the plurality of patterns comprises patterns based on causal interrelationships between user actions of the plurality of user actions. In yet another example, the plurality of patterns comprises patterns based on relationships between each user action of the plurality of user actions and a role and an access right of a user of the plurality of users, who has executed the particular user action.

Further, the processing unit 202 is configured to classify the plurality of user actions into a plurality of groups, based on the identification of the plurality of patterns in the plurality of user actions. The processing unit 202 is configured to map each group of the plurality of groups to a specific user profile of the plurality of user profiles 108AN. Further, the processing unit 202 is configured to determine whether a user action performed by a user of the plurality of users, belong to a particular group of the plurality of groups of user actions. If the user action is determined to belong to a particular group of the plurality of groups, then the user is assigned to a user profile, in the plurality of user profiles, which is mapped to the particular group. Advantageously, the plurality of user profiles are not generated based a name, age, or designation of each of the plurality of user. Instead, the plurality of user profiles are generated automatically based on the analysis of engineering actions performed by the plurality of users in the multi-user engineering environment 100.

For example, types of the engineering actions performed by the plurality of users comprises actions such as modification of programming code, and modification of hardware configuration settings. The plurality of users are grouped into the plurality of user profiles based on a type of the engineering action performed by the plurality of users.

Thus, a need for storing confidential information of the plurality of users is eradicated. Examples of the confidential information includes a name, an age, a password, and a date of birth of the user. Advantageously, cybersecurity associated with the engineering environment is improved. Further, since the plurality of user profiles 108A-N of the plurality of users are automatically generated, time and manual labor usually consumed for performing system administration of the multi-user engineering environment is reduced. Advantageously, labor involved in manually generating user profiles is eliminated.

The processing unit 202 is further configured to train an artificial intelligence model to generate a workflow which is specific to each user profile of the plurality of user profiles 108A-N. The artificial intelligence model is trained based on the analysis of the plurality of user actions of the plurality of users. Examples of the artificial intelligence model includes but is not limited to a linear regression based model, a logistic regression based model, and a decision tree based model. If a particular group of the plurality of groups is mapped to a particular user profile of the plurality of user profiles, then the artificial intelligence model is trained to generate the workflow specific to the particular user profile by analysis of user actions belonging to the particular group of the plurality of groups. Thus, each workflow generated by the artificial intelligence model is a result of training the artificial intelligence model with a specific group of user actions that is mapped to a specific user profile of the plurality of user profiles 108AN. Thus, each workflow generated by the artificial intelligence model is specifically customized for each user profile of the plurality of user profiles 108A-N. Advantageously, a workflow generated by the artificial intelligence model, for a user profile comprises a list of user actions which are relevant to the user profile. As a result, a probability of a user, of the user profile, accepting the generated workflow is high. Further, advantageously, inputs used to train the artificial intelligence module is refined and categorized to the plurality of groups.

The processing unit 202 is further configured to receive from a user, at least one user action performed by the user in the multi-user engineering environment 100. The at least one user action is an engineering action performed by the us-er in the multi-user engineering environment 100. The at least one user action is executed by the user via at least one of the plurality of client devices 120A-N. The engineering action is executed by the user to contribute to a development, a maintenance, or testing of an engineering project in the multi-user engineering environment. Examples of the engineering action includes, but is not limited to configuring hardware settings of one or more devices in the multi-user engineering environment 100, generating computer code, amending code, modifying configuration settings of one or more engineering objects and modifying one or more parameters associated with the engineering project in the multi-user engineering environment 100. The processing unit 202 is further configured to analyze the at least one user action to determine a pattern associated with the at least one user action. In one example, the determined pattern is based on causal interrelationships between the at least one user action and one or more other user actions performed by the user. In another example, the determined pattern is based on relationships between the at least one user action and the role and the access right of the user in the multi-user engineering environment 100.

The processing unit 202 is further configured to determine whether the pattern associated with the at least one us-er action is similar to at least one of the plurality of patterns determined from the plurality of user actions. The processing unit 202 is further configured to match the pattern to at least one group of the plurality of groups of user actions. The processing unit 202 is further configured to determine a user profile, of the plurality of user profiles, which corresponds to the at least one group of the plurality of groups. In other words, the user profile is determined for the user, from the generated plurality of user profiles 108AN based on an analysis of the detected at least one user action. In one example, the at least one user action is analyzed by an application of the unsupervised learning algorithm on the at least one user action. Advantageously, the user is matched to the user profile of the plurality of user profiles 108A-N, without having to receive confidential data such as passwords, gestures, and patterns from the user. Instead, the user is determined to have the user profile based on an analysis of the at least one user action (engineering action) executed by the user in the multi-user engineering environment 100. Further, the user is determined to be of the user profile based on a similarity of the pattern associated with the at least one user action, to at least one of the plurality of patterns. Thus, the user is assigned the user profile even if the at least one user action is absent in the plurality of user actions received from the user. Advantageously, even if a user action which is not present in the plurality of user actions is received from the user, the processing unit 202 is configured to assign the user profile to the user. Thus, a scalability of the multi-user engineering environment is improved.

The processor 202 is further configured to generate a workflow which is specific to the user based on the determined user profile and an application of the generated artificial intelligence model on the detected at least one user action performed by the user in the multi-user engineering environment. The workflow comprises a sequence of user actions present in the at least one group of the plurality of groups of user actions. Advantageously, the workflow is generated based on the at least one group of user actions, which is associated with the determined user profile of the user. Thus, the workflow is personalized for the user.

The storage unit 206 may be a non-transitory storage medium configured for storing a database (such as the user profile database 106) which comprises server version of the plurality of user profiles 108A-N associated with the plurality of users.

The communication interface 208 is configured for establishing communication sessions between the one or more client devices 120A-N and the engineering system 102. The communication interface 208 allows the one or more engineering applications running on the client devices 120A-N to communicate the plurality of user actions performed by the plurality of users into the engineering system 102. In an embodiment, the communication interface 208 interacts with the interface at the one or more client devices 120A-N for allowing the engineers to access the engineering programs associated with an engineering project file and perform the plurality of user actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210. The network interface 212 may be configured to handle network connectivity, bandwidth and network traffic between the engineering system 102, client devices 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

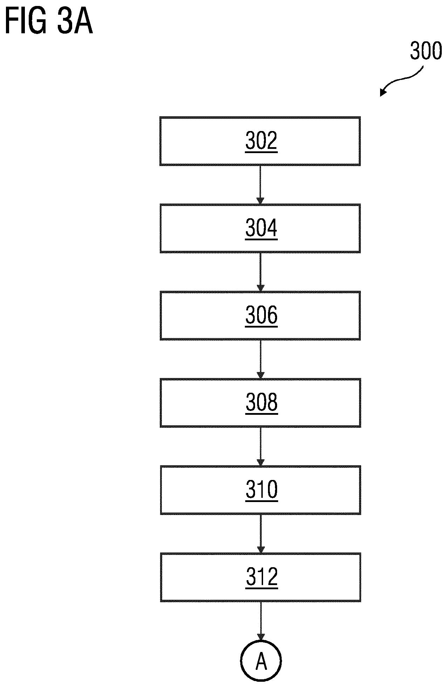

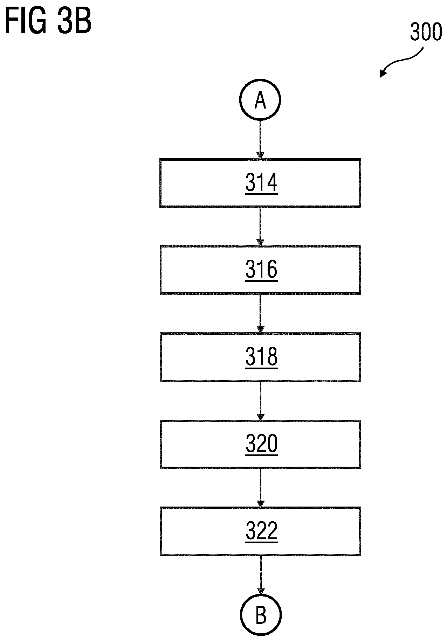

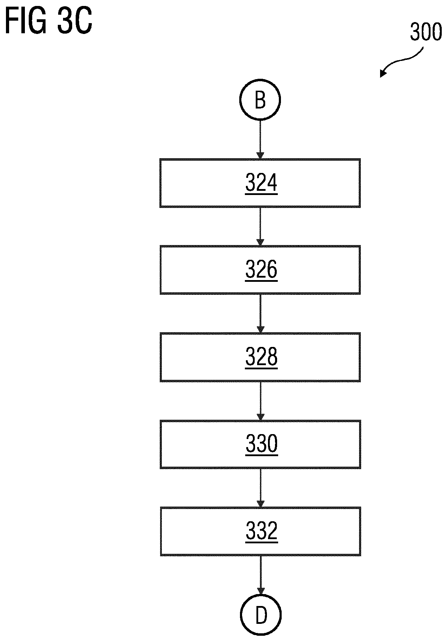

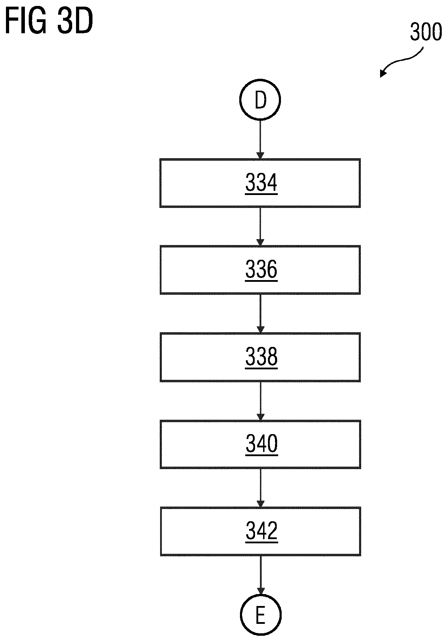

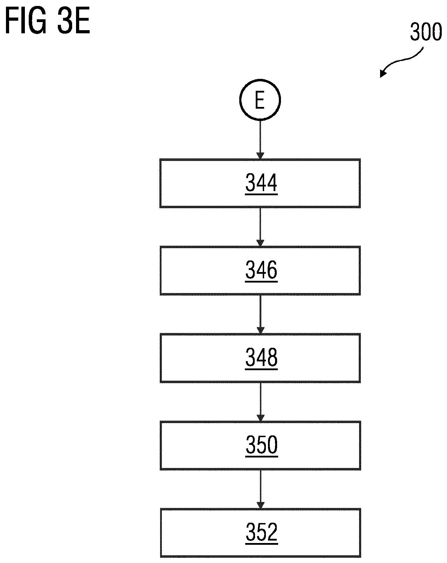

FIG 3A-E is a process flowchart illustrating an exemplary method 300 of generating user specific engineering programs in the multi-user engineering environment 100, according to an embodiment of the present invention. Fig. 3A-E is explained in conjunction with Fig. 1 and Fig. 2

At step 302, the plurality of user profiles 108A-N are generated by the processing unit 202. The plurality of user profiles 108A-N comprises information associated with the plurality of users.

The plurality of user profiles 108A-N is generated based on the analysis of the plurality of user actions performed by the plurality of users in the multi-user engineering environment 100. In one example, the plurality of user profiles 108A-N are generated by application of the unsupervised learning algorithm on the plurality of user actions. Examples of the unsupervised learning algorithm includes but is not limited to a hierarchal clustering algorithm and a K-means clustering algorithm.

At step 304 a plurality of patterns are identified by the processor 202, in the plurality of user actions. In one example, the plurality of patterns comprises patterns which are based on a sequence in which the plurality of user actions are executed by the plurality of users. In another example, the plurality of patterns comprises patterns based on causal interrelationships between user actions of the plurality of user actions. In yet another example, the plurality of patterns comprises patterns based on relationships between each user action of the plurality of user actions and a role and an access right of a user of the plurality of users, who has executed the particular user action.

At 306, the plurality of user actions are classified by the processing unit 202 into a plurality of groups, based on the identification of the plurality of patterns in the plurality of user actions.

At step 308, each group of the plurality of groups is mapped by the processing unit 202, to a specific user profile of the plurality of user profiles 108A-N.

At step 310, it is determined whether a user action performed by a user of the plurality of users, belong to a particular group of the plurality of groups of user actions. If the user action is determined to belong to a particular group of the plurality of groups, then the user is assigned to a user profile, within the plurality of user profiles 108A-N, which is mapped to the particular group. Advantageously, the plurality of user profiles 108A-N are not generated based a name, age, or designation of each of the plurality of user. Instead, the plurality of user profiles 108A-N are generated automatically based on the analysis of engineering actions performed by the plurality of users in the multi-user engineering environment. Thus, a need for storing confidential information of the plurality of users is eradicated. Examples of the confidential information includes a name, an age, a password, a signature, and a date of birth of the user. Further, since the plurality of user profiles 108A-N of the plurality of users are automatically generated, time and manual labor usually consumed for performing system administration of the multi-user engineering environment 100 is reduced. Advantageously, labor involved in manually generating user profiles is eliminated.

At 312, the artificial intelligence model to generate a workflow which is specific to each user profile of the plurality of user profiles, is trained by the processing unit 202. The artificial intelligence model is trained based on the analysis of the plurality of user actions of the plurality of users. Examples of the artificial intelligence model includes but is not limited to a linear regression based model, a logistic regression based model, and a decision tree based model.

A particular group which is mapped to a particular user profile, is analyzed to generate a workflow which is specific and personalized for the particular user profile. In other words, if a specific group, of the plurality of groups, is mapped to a particular user profile, of the plurality of user profiles, then the artificial intelligence model is trained to generate the workflow specific to the particular user profile by analysis of user actions belonging to the particular group of the plurality of groups. Thus, each workflow generated by the artificial intelligence model is a result of training the artificial intelligence model with a specific group of user actions that is mapped to a specific user profile of the plurality of user profiles 108A-N. Thus, each workflow generated by the artificial intelligence model is specifically customized for each user profile of the plurality of user profiles. Advantageously, a workflow generated by the artificial intelligence model, for a user profile comprises a list of user actions which are relevant to the user profile. As a result, a probability of a user, of the user profile, accepting the generated workflow is high. Further, advantageously, inputs used to train the artificial intelligence module is refined and categorized to the plurality of groups.

At 314, at least one user action performed by a user in the multi-user engineering environment 100 is detected by the processing unit 202, from the user. The at least one user action is an engineering action performed by the user in the multi-user engineering environment 100.

At 316, the at least one user action is analyzed by the processing unit 202 to determine a pattern associated with the at least one user action. In one example, the determined pattern is based on causal interrelationships between the at least one user action and one or more other user actions performed by the user. In another example, the determined pattern is based on relationships between the at least one user action and the role and the access right of the user in the multi-user engineering environment.

At step 318, it is determined by the processing unit 202, whether the pattern associated with the at least one user action is similar to at least one of the plurality of patterns determined from the plurality of user actions.

At step 320, the pattern is matched by the processing unit 202 to at least one group of the plurality of groups of user actions. A user profile, of the plurality of user profiles, is determined, by the processing unit 202, to correspond to the at least one group of the plurality of groups. In other words, the processing unit 202 is configured to determine that a user profile for the user, from the generated plurality of user profiles 108A-N based on an analysis of the detected at least one user action. In one example, the at least one user action is analyzed by an application of the unsupervised learning algorithm on the at least one user action. Advantageously, the user is matched to the user profile of the plurality of user profiles 108A-N, without having to receive confidential data such as passwords, gestures, and patterns from the user. Instead, the user is determined to have the user profile based on an analysis of the at least one user action (engineering action) executed by the user in the multi-user engineering environment 100. Further, the user is determined to be of the user profile based on a similarity of the pattern associated with the at least one user action, to at least one of the plurality of patterns.

Thus, the user is assigned the user profile even if the at least one user action is absent in the plurality of user actions received from the user. Advantageously, even if a us-er action which is not present in the plurality of user actions is received from the user, by the processing unit, the method comprises assigning the user profile to the user. Thus, a scalability of the multi-user engineering environment is improved.

At step 322, a workflow which is specific to the user is generated by the processing unit 202 based on the determined user profile and an application of the generated artificial intelligence model on the detected at least one user action performed by the user in the multi-user engineering environment 100. The workflow comprises a sequence of user actions present in the at least one group of the plurality of groups of user actions. Advantageously, the workflow is generated based on the at least one group of user actions, which is associated with the determined user profile of the user. Thus, the workflow is personalized for the user.

At step 324, it is determined by the processing unit 202 whether each user action of a set of user actions, in the plurality of user actions, are of an identical pattern in the plurality of patterns.

At step 326, it is determined by the processing unit 202, from the plurality of users, two or more users associated with the determined set of user actions. The determined two or more users of the plurality of users have performed the set of user actions.

At step 328, the determined two or more users are grouped by the processing unit 202 into a first user profile of the plurality of user profiles, based on the determination that each user action of the set of user actions are of the identical pattern of the plurality of patterns.

At step 330, the set of user actions are categorized by the processing unit 202 into a group of user actions, based on the determination that that each user action of the set of user actions are of the identical pattern of the plurality of patterns.

At step 332, the artificial intelligence model is trained by the processing unit 202 to generate a another workflow which is specific to every user of the user profile. The artificial intelligence model is trained by application of the unsupervised learning algorithm on the set of user actions. The another workflow comprises a sequence of user actions present in the cluster of user actions.

At step 334, a user action is extracted by the processing unit, from the generated workflow.

At step 336, a count of user actions is determined by the processor 202, in the plurality of user actions, which are similar to the extracted user action. The processing unit 202 is also configured to determine that the determined count of user actions is lesser than a threshold.

At step 338, the user action is removed by the processing unit 202 from the generated workflow, based on the determination that the determined count of user actions is lesser than a threshold. Advantageously, the user action, which is dissimilar to other user actions in the plurality of user actions, is removed from the generated workflow.

At step 340, a user request is received by the processing unit 202 to execute the generated workflow in the multi-user engineering environment 100.

At step 342, the generated workflow is executed by the processing unit 202, in the multi-user engineering environment 100 based on the received user request. Advantageously, the processing unit is configured to automatically execute the generated workflow, thereby reducing an engineering effort of the user.

At step 344, a user action performed by the user is received by the processing unit 202, in the multi-user engineering environment 100.

At step 346, a count of user actions in the plurality of user actions, which are similar to the user action, is determined by the processing unit 202. The processing unit 202 is further configured to compare the determined count of user action with a threshold.

At step 348, it is determined by the processing unit 202 that the user action is an outlier based the comparison. The processing unit 202 is configured to train the artificial intelligence model to generate another workflow for the determined user profile of the user. The artificial intelligence model is trained based on the determination that the user action is the outlier, and the generated another workflow comprises user action. Advantageously, the artificial intelligence model is trained to take into account outlier user actions.

At step 350, a user action which is executed by the user in the multi-user engineering environment 100, is received by the processing unit 202. The processing unit 202 is further configured to determine whether an execution of the user action is successful, based on an analysis of one or more key performance indicators in the multi-user engineering environment 100.

At step 352, the artificial intelligent model is trained by the processing unit 202 to generate another workflow for the determined user profile of the user. The artificial intelligence model is trained based on the determination that the execution of the user action is successful, and the generated another workflow comprises user action.

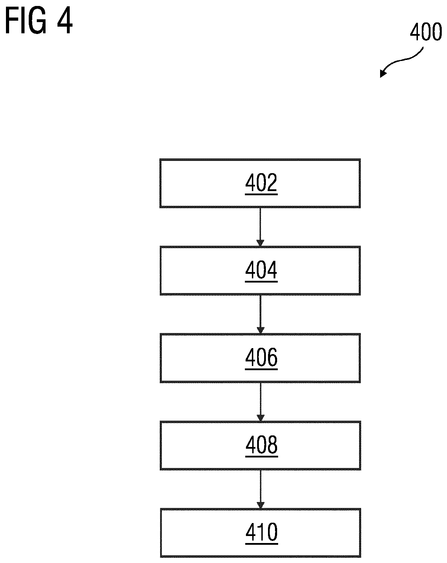

FIG 4 is a process flowchart illustrating an exemplary method 400 of generating user specific engineering programs in the multi-user engineering environment 100, according to an embodiment of the present invention. Fig. 4 is explained in conjunction with Fig. 1 and Fig. 2

At step 402, the plurality of user actions performed by the plurality of users in the multi-user engineering environment 100, are received by the processing unit 202.

At step 404, a plurality of clusters of user actions from the plurality of user actions is determined by the processing unit 202, based on an application of an unsupervised learning algorithm on the plurality of user actions. Each cluster of user actions in the plurality of clusters of user actions represent a specific logical workflow associated with the plurality of users.

At step 406, the plurality of user profiles 108A-N are generated by the processing unit 202, for the plurality of users, based on an analysis of the plurality of clusters of user actions. Each user profile of the plurality of user profiles is associated with at least one cluster of user actions of the plurality of clusters of user actions.

At step 408, the artificial intelligence model is trained by the processing unit 202 to generate a workflow which is specific to each user profile of the plurality of user profiles, based on the analysis of the plurality of clusters of user actions of the plurality of users, wherein the workflow generated for each user profile of the plurality of user profiles comprises at least one cluster of user actions associated with the particular user profile.

At step 410, the workflow for each user profile of the plurality of user profiles is generated by the processing unit 202 based on the application of the artificial intelligence model on the plurality of user actions.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. The scope of the present invention is, therefore, indicated by the following claims rather than by the foregoing description. All advantageous embodiments claimed in method claims may also be apply to system/apparatus claims.

## Claims

1. A method of generating user specific engineering programs in a multi-user engineering environment (100), the method comprising:
generating, by a processing unit (202), a plurality of user profiles (108A-N) for a plurality of users based on an analysis of a plurality of user actions performed by the plurality of users in the multi-user engineering environment (100),
wherein each user action of the plurality of user actions is an engineering action performed by the users to perform development, maintenance and testing of an engineering project, and
wherein a plurality of patterns is identified by the processing unit (202) in the plurality of user actions;
detecting, by the processing unit (202), at least one user action performed by a user of the plurality of users in the multi-user engineering environment (100);
determining, by the processing unit (202), a user profile associated with the user from the generated plurality of user profiles (108A-N) based on the detected at least one user action;
generating, by the processing unit (202), a workflow which is specific to the determined user profile and an application of a trained artificial intelligence model on the detected at least one user action; and
executing, by the processing unit (202), the generated workflow in the multi-user engineering environment (100); and
dynamically generating an engineering program for use in an automation system based on the execution of the generated workflow and based on the analysis of the plurality of user actions performed by the plurality of users in the multi-user engineering environment (100) and the detected at least one user action of the user; and
receiving, by the processing unit (202), a user action which is executed by the user in the multi-user engineering environment;
determining, by the processing unit (202), whether an execution of the user action is successful based on an analysis of one or more key performance indicators in the multi-user engineering environment (100); and
generating, by the processing unit (202), another work-flow for the determined user profile of the user using the artificial intelligence model, wherein the artificial intelligence model is trained based on the determination that the execution of the user action is successful, and the generated another workflow comprises the user action.

2. The method according to claim 1, further comprising:
determining, by the processing unit (202), a plurality of patterns in the plurality of user actions based on an application of an unsupervised learning algorithm on the plurality of user actions;
determining, by the processing unit (202), whether each user action of a set of user actions in the plurality of user actions are of an identical pattern in the plurality of patterns;
determining, by the processing unit (202), that the determined set of user actions is executed by two or more users of the plurality of users; and
grouping, by the processing unit (202), the two or more users into another user profile of the plurality of user profiles based on the determination that the set of user actions which are of the identical pattern is executed by the two or more users.

3. The method according to claim 1 or 2, further comprising
training an artificial intelligence model to generate workflows specific to each user profile of the plurality of user profiles (108A-N), wherein the artificial intelligence model is trained based on the analysis of the plurality of user actions of the plurality of users in the multi-user engineering environment.

4. The method according to claim 3, wherein training the artificial intelligence model comprises:
categorizing, by the processing unit (202), the set of user actions into a cluster of user actions based on the determination that each user action of the set of user actions are of the identical pattern of the plurality of patterns; and
training, by the processing unit (202), the artificial intelligence model to generate another workflow which is specific to every user of the user profile, wherein
the artificial intelligence model is trained by application of the unsupervised learning algorithm on the set of user actions, and
the another workflow comprises a sequence of user actions present in the cluster of user actions.

5. The method according to claim 2, wherein the plurality of patterns in the plurality of user actions comprises a pattern of interrelationships between each user action of the plurality of user actions, and an engineering project associated with the multi-user engineering environment.

6. The method according to claim 1, further comprising:
extracting, by the processing unit (202), a user action from the generated workflow;
determining, by the processing unit (202), a count of us-er actions in the plurality of user actions which are similar to the extracted user action;
determining, by the processing unit (202), that the determined count of user actions is lesser than a threshold; and
removing, by the processing unit (202), the user action from the generated workflow based on the determination that the determined count of user actions is lesser than the threshold.

7. The method according to claim 1, further comprising:
receiving, by the processing unit (202), a user request to execute the generated workflow in the multi-user engineering environment, wherein the engineering program is generated based on the received user request.

8. The method according to claim 1, further comprising:
receiving, by the processing unit (202), a user action performed by the user in the multi-user engineering environment;
determining, by the processing unit (202), a count of us-er actions in the plurality of user actions which are similar to the user action;
comparing, by the processing unit(202), the determined count of user action with a threshold;
determining, by the processing unit (202), that the user action is an outlier based the comparison; and
training, by the processing unit (202), the artificial intelligence model to generate another workflow for the determined user profile of the user, wherein the artificial intelligence model is trained based on the determination that the user action is the outlier, and the generated another workflow comprises user action.

9. The method according to claim 1, further comprising generating, by the processing unit (202), a plurality of user action clusters from the plurality of user actions based on the application of the unsupervised learning algorithm on the plurality of user actions, wherein each user action cluster of the plurality of user action clusters represent a specific logical workflow.

10. The method according to claim 1, further comprising training an artificial intelligence model to generate the workflow which is specific to each user profile of the plurality of user profiles (108A-N) based on the analysis of the plurality of clusters of user actions of the plurality of users, wherein the workflow generated for each user profile of the plurality of user profiles (108A-N) comprises at least one cluster of user actions associated with the particular user profile.

11. An engineering system (102) for generation of an engineering program which is specific to each user of a plurality of users in a multi-user engineering environment, wherein the engineering system comprises:
one or more processing unit (202); and
a memory (204) coupled to the one or more processing unit (202), wherein the memory comprises an automation module (112) stored in the form of machine-readable instructions which, when executed by the one or more processing unit (202), cause the one or more processing unit (202) to perform the steps of the method according to any one of claim 1 to 10.

12. An engineering environment (100) comprising:
an engineering system (102) as claimed in claim 11;
a technical installation (106) comprising one or more physical components; and
one or more client devices (120A-N) communicatively coupled to the engineering system (102) via a network (104).

13. A computer-program product, having machine-readable instructions stored therein, that when executed by a processing unit (202), cause the processing unit (202) to perform a method according to any of the claims 1-10.

## Patentansprüche

1. Verfahren zum Erzeugen benutzerspezifischer Engineeringprogramme in einer Mehrbenutzer-Engineeringumgebung (100), wobei das Verfahren Folgendes umfasst:
Erzeugen, durch eine Verarbeitungseinheit (202), mehrerer Benutzerprofile (108A-N) für mehrere Benutzer basierend auf einer Analyse mehrerer Benutzeraktionen, die durch die mehreren Benutzer in der Mehrbenutzer-Engineeringumgebung (100) durchgeführt werden,
wobei jede Benutzeraktion der mehreren Benutzeraktionen eine Engineeringaktion ist, die durch die Benutzer durchgeführt wird, um Entwicklung, Wartung und Testen eines Engineeringprojekts durchzuführen, und
wobei mehrere Muster durch die Verarbeitungseinheit (202) in den mehreren Benutzeraktionen identifiziert werden;
Detektieren, durch die Verarbeitungseinheit (202), mindestens einer Benutzeraktion, die durch einen Benutzer der mehreren Benutzer in der Mehrbenutzer-Engineeringumgebung (100) durchgeführt wird;
Bestimmen, durch die Verarbeitungseinheit (202), eines Benutzerprofils, das mit dem Benutzer assoziiert ist, aus den erzeugten mehreren Benutzerprofilen (108A-N) basierend auf der detektierten mindestens einen Benutzeraktion;
Erzeugen, durch die Verarbeitungseinheit (202), eines Arbeitsablaufs, der spezifisch für das bestimmte Benutzerprofil und eine Anwendung eines trainierten Modells künstlicher Intelligenz auf die detektierte mindestens eine Benutzeraktion ist; und
Ausführen, durch die Verarbeitungseinheit (202), des erzeugten Arbeitsablaufs in der Mehrbenutzer-Engineeringumgebung (100); und
Dynamisches Erzeugen eines Engineeringprogramms zur Verwendung in einem Automatisierungssystem basierend auf der Ausführung des erzeugten Arbeitsablaufs und basierend auf der Analyse der mehreren Benutzeraktionen, die durch die mehreren Benutzer in der Mehrbenutzer-Engineeringumgebung durchgeführt werden (100), und der detektierten mindestens einen Benutzeraktion des Benutzers; und
Empfangen, durch die Verarbeitungseinheit (202), einer Benutzeraktion, die durch den Benutzer in der Mehrbenutzer-Engineeringumgebung ausgeführt wird;
Bestimmen, durch die Verarbeitungseinheit (202), ob eine Ausführung der Benutzeraktion erfolgreich ist, basierend auf einer Analyse eines oder mehrerer Schlüsselleistungsindikatoren in der Mehrbenutzer-Engineeringumgebung (100); und
Erzeugen, durch die Verarbeitungseinheit (202), eines anderen Arbeitsablaufs für das bestimmte Benutzerprofil des Benutzers unter Verwendung des Modells künstlicher Intelligenz, wobei das Modell künstlicher Intelligenz basierend auf der Bestimmung trainiert wird, dass die Ausführung der Benutzeraktion erfolgreich ist, und der erzeugte andere Arbeitsablauf die Benutzeraktion umfasst.

2. Verfahren nach Anspruch 1, das ferner Folgendes umfasst:
Bestimmen, durch die Verarbeitungseinheit (202), mehrerer Muster in den mehreren Benutzeraktionen basierend auf einer Anwendung eines unbeaufsichtigten Lernalgorithmus auf den mehreren Benutzeraktionen;
Bestimmen, durch die Verarbeitungseinheit (202), ob jede Benutzeraktion eines Satzes von Benutzeraktionen in den mehreren Benutzeraktionen ein identisches Muster in den mehreren Mustern aufweist;
Bestimmen, durch die Verarbeitungseinheit (202), dass der bestimmte Satz von Benutzeraktionen durch zwei oder mehr Benutzer der mehreren Benutzer ausgeführt wird; und
Gruppieren, durch die Verarbeitungseinheit (202), der zwei oder mehr Benutzer in ein anderes Benutzerprofil der mehreren Benutzerprofile basierend auf der Bestimmung, dass der Satz von Benutzeraktionen, die das identische Muster aufweisen, durch die zwei oder mehr Benutzer ausgeführt wird.

3. Verfahren nach Anspruch 1 oder 2, das ferner Folgendes umfasst:
Trainieren eines Modells künstlicher Intelligenz, um Arbeitsabläufe zu erzeugen, die für jedes Benutzerprofil der mehreren Benutzerprofile (108A-N) spezifisch sind, wobei das Modell künstlicher Intelligenz basierend auf der Analyse der mehreren Benutzeraktionen der mehreren Benutzer in der Mehrbenutzer-Engineeringumgebung trainiert wird.

4. Verfahren nach Anspruch 3, wobei das Trainieren des Modells künstlicher Intelligenz Folgendes umfasst:
Kategorisieren, durch die Verarbeitungseinheit (202), des Satzes von Benutzeraktionen in einen Cluster von Benutzeraktionen basierend auf der Bestimmung, dass jede Benutzeraktion des Satzes von Benutzeraktionen von dem identischen Muster der mehreren Muster ist; und
Trainieren, durch die Verarbeitungseinheit (202), des Modells künstlicher Intelligenz, um einen anderen Arbeitsablauf zu erzeugen, der für jeden Benutzer des Benutzerprofils spezifisch ist, wobei
das Modell künstlicher Intelligenz durch Anwendung des unbeaufsichtigten Lernalgorithmus auf den Satz von Benutzeraktionen trainiert wird, und
der andere Arbeitsablauf eine Sequenz von Benutzeraktionen umfasst, die in dem Cluster von Benutzeraktionen vorhanden sind.

5. Verfahren nach Anspruch 2, wobei die mehreren Muster in den mehreren Benutzeraktionen ein Muster von Zusammenhängen zwischen jeder Benutzeraktion der mehreren Benutzeraktionen und einem Engineeringprojekt, das mit der Mehrbenutzer-Engineeringumgebung assoziiert ist, umfassen.

6. Verfahren nach Anspruch 1, das ferner Folgendes umfasst:
Extrahieren, durch die Verarbeitungseinheit (202), einer Benutzeraktion aus dem erzeugten Arbeitsablauf;
Bestimmen, durch die Verarbeitungseinheit (202), einer Anzahl von Benutzeraktionen in den mehreren Benutzeraktionen, die der extrahierten Benutzeraktion ähnlich sind;
Bestimmen, durch die Verarbeitungseinheit (202), dass die bestimmte Anzahl von Benutzeraktionen kleiner als ein Schwellenwert ist; und
Entfernen, durch die Verarbeitungseinheit (202), der Benutzeraktion aus dem erzeugten Arbeitsablauf basierend auf der Bestimmung, dass die bestimmte Anzahl von Benutzeraktionen kleiner als der Schwellenwert ist.

7. Verfahren nach Anspruch 1, das ferner Folgendes umfasst:
Empfangen, durch die Verarbeitungseinheit (202), einer Benutzeranforderung, den erzeugten Arbeitsablauf in der Mehrbenutzer-Engineeringumgebung auszuführen, wobei das Engineeringprogramm basierend auf der empfangenen Benutzeranforderung erzeugt wird.

8. Verfahren nach Anspruch 1, das ferner Folgendes umfasst:
Empfangen, durch die Verarbeitungseinheit (202), einer Benutzeraktion, die durch den Benutzer in der Mehrbenutzer-Engineeringumgebung durchgeführt wird;
Bestimmen, durch die Verarbeitungseinheit (202), einer Anzahl von Benutzeraktionen in den mehreren Benutzeraktionen, die der Benutzeraktion ähnlich sind;
Vergleichen, durch die Verarbeitungseinheit (202), der bestimmten Anzahl von Benutzeraktionen mit einem Schwellenwert; Bestimmen, durch die Verarbeitungseinheit (202), dass die Benutzeraktion ein Ausreißer ist, basierend auf dem Vergleich; und
Trainieren, durch die Verarbeitungseinheit (202), des Modells künstlicher Intelligenz, um einen anderen Arbeitsablauf für das bestimmte Benutzerprofil des Benutzers zu erzeugen, wobei das Modell künstlicher Intelligenz basierend auf der Bestimmung trainiert wird, dass die Benutzeraktion der Ausreißer ist, und der erzeugte andere Arbeitsablauf eine Benutzeraktion umfasst.

9. Verfahren nach Anspruch 1, das ferner das Erzeugen, durch die Verarbeitungseinheit (202), mehrerer Benutzeraktionscluster aus den mehreren Benutzeraktionen basierend auf der Anwendung des unbeaufsichtigten Lernalgorithmus auf die mehreren Benutzeraktionen umfasst, wobei jeder Benutzeraktionscluster der mehreren Benutzeraktionscluster einen spezifischen logischen Arbeitsablauf repräsentiert.

10. Verfahren nach Anspruch 1, das ferner das Trainieren eines Modells künstlicher Intelligenz umfasst, um den Arbeitsablauf zu erzeugen, der für jedes Benutzerprofil der mehreren Benutzerprofile (108A-N) spezifisch ist, basierend auf der Analyse der mehreren Cluster von Benutzeraktionen der mehreren Benutzer, wobei der Arbeitsablauf, der für jedes Benutzerprofil der mehreren Benutzerprofile (108A-N) erzeugt wird, mindestens einen Cluster von Benutzeraktionen umfasst, die mit dem jeweiligen Benutzerprofil assoziiert sind.

11. Engineeringsystem (102) zur Erzeugung eines Engineeringprogramms, das für jeden Benutzer mehrerer Benutzer in einer Mehrbenutzer-Engineeringumgebung spezifisch ist, wobei das Engineeringsystem Folgendes umfasst:
eine oder mehrere Verarbeitungseinheiten (202); und
einen Speicher (204), der mit der einen oder den mehreren Verarbeitungseinheiten (202) gekoppelt ist, wobei der Speicher ein Automatisierungsmodul (112) umfasst, das in Form von maschinenlesbaren Anweisungen gespeichert ist, die, wenn sie von der einen oder den mehreren Verarbeitungseinheiten (202) ausgeführt werden, die eine oder die mehreren Verarbeitungseinheiten (202) veranlassen, die Schritte des Verfahrens nach einem der Ansprüche 1 bis 10 durchzuführen.

12. Engineeringumgebung (100), die Folgendes umfasst:
ein Engineeringsystem (102) nach Anspruch 11;
eine technische Installation (106), die eine oder mehrere physische Komponenten umfasst; und
eine oder mehrere Client-Vorrichtungen (120A-N), die über ein Netzwerk (104) kommunikativ mit dem Engineeringsystem (102) gekoppelt sind.

13. Computerprogrammprodukt mit darin gespeicherten maschinenlesbaren Anweisungen, die, wenn sie durch eine Verarbeitungseinheit (202) ausgeführt werden, die Verarbeitungseinheit (202) veranlassen, ein Verfahren nach einem der Ansprüche 1 bis 10 durchzuführen.

## Revendications

1. Procédé de génération de programmes d'ingénierie spécifiques d'utilisateur dans un environnement d'ingénierie multi-utilisateur (100), le procédé comprenant :
la génération, par une unité de traitement (202), d'une pluralité de profils utilisateur (108A-N) pour une pluralité d'utilisateurs sur la base d'une analyse d'une pluralité d'actions utilisateur réalisées par la pluralité d'utilisateurs dans l'environnement d'ingénierie multi-utilisateur (100),
dans lequel chaque action utilisateur de la pluralité d'actions utilisateur est une action d'ingénierie réalisée par les utilisateurs pour réaliser le développement, la maintenance, et la mise à l'essai d'un projet d'ingénierie, et
dans lequel une pluralité de types est identifiée par l'unité de traitement (202) dans la pluralité d'actions utilisateur ;
la détection, par l'unité de traitement (202), au moins d'une action utilisateur réalisée par un utilisateur de la pluralité d'utilisateurs dans l'environnement d'ingénierie multi-utilisateur (100) ;
la détermination, par l'unité de traitement (202), d'un profil utilisateur, associé à l'utilisateur, parmi la pluralité générée de profils utilisateur (108A-N), sur la base de l'au moins une action utilisateur détectée ;
la génération, par l'unité de traitement (202), d'un flux de travaux qui est spécifique au profil utilisateur déterminé, et une application d'un modèle entraîné d'intelligence artificielle sur l'au moins une action utilisateur détectée ; et
l'exécution, par l'unité de traitement (202), du flux de travaux généré dans l'environnement d'ingénierie multi-utilisateur (100) ; et
la génération dynamique d'un programme d'ingénierie destiné à être utilisé dans un système d'automatisation, sur la base de l'exécution du flux de travaux généré et sur la base de l'analyse de la pluralité d'actions utilisateur réalisées par la pluralité d'utilisateurs dans l'environnement d'ingénierie multi-utilisateur (100) et de l'au moins une action utilisateur détectée de l'utilisateur ; et
la réception, par l'unité de traitement (202), d'une action utilisateur qui est exécutée par l'utilisateur dans l'environnement d'ingénierie multi-utilisateur ;
la détermination, par l'unité de traitement (202), du fait qu'une exécution de l'action utilisateur est, ou n'est pas, réussie, sur la base d'une analyse d'un ou de plusieurs indicateurs de performances clefs dans l'environnement d'ingénierie multi-utilisateur (100) ; et
la génération, par l'unité de traitement (202), d'un autre flux de travaux pour le profil utilisateur déterminé de l'utilisateur en utilisant le modèle d'intelligence artificielle, dans lequel le modèle d'intelligence artificielle est entraîné sur la base de la détermination que l'exécution de l'action utilisateur est réussie, et l'autre flux de travaux généré comprend l'action utilisateur.

2. Procédé selon la revendication 1, comprenant en outre :
la détermination, par l'unité de traitement (202), d'une pluralité de types dans la pluralité d'actions utilisateur, sur la base d'une application d'un algorithme d'apprentissage non supervisé sur la pluralité d'actions utilisateur ;
la détermination, par l'unité de traitement (202), du fait que chaque action utilisateur d'un ensemble d'actions utilisateur dans la pluralité d'actions utilisateur sont, ou ne sont pas, d'un type identique dans la pluralité de types ;
la détermination, par l'unité de traitement (202), que l'ensemble déterminé d'actions utilisateur est exécuté par deux, ou plus, utilisateurs de la pluralité d'utilisateurs ; et
le rassemblement, par l'unité de traitement (202), des deux, ou plus, utilisateurs en un autre profil utilisateur de la pluralité de profils utilisateur sur la base de la détermination que l'ensemble d'actions utilisateur qui sont du type identique est exécuté par les deux, ou plus, utilisateurs.

3. Procédé selon la revendication 1 ou 2, comprenant en outre l'entraînement d'un modèle d'intelligence artificielle pour générer des flux de travaux spécifiques à chaque profil utilisateur de la pluralité de profils utilisateur (108A-N), dans lequel le modèle d'intelligence artificielle est entraîné sur la base de l'analyse de la pluralité d'actions utilisateur de la pluralité d'utilisateurs dans l'environnement d'ingénierie multi-utilisateur.

4. Procédé selon la revendication 3, dans lequel l'entraînement du modèle d'intelligence artificielle comprend :
la catégorisation, par l'unité de traitement (202), de l'ensemble d'actions utilisateur en un groupe d'actions utilisateur, sur la base de la détermination que chaque action utilisateur de l'ensemble d'actions utilisateur sont du type identique de la pluralité de types ; et
l'entraînement, par l'unité de traitement (202), du modèle d'intelligence artificielle pour générer un autre flux de travaux qui est spécifique à chaque utilisateur du profil utilisateur, dans lequel
le modèle d'intelligence artificielle est entraîné par application de l'algorithme d'apprentissage non supervisé sur l'ensemble d'actions utilisateur, et
l'autre flux de travaux comprend une séquence d'actions utilisateur présentes dans le groupe d'actions utilisateur.

5. Procédé selon la revendication 2, dans lequel la pluralité de types dans la pluralité d'actions utilisateur comprend un type d'interrelations entre chaque action utilisateur de la pluralité d'actions utilisateur, et un projet d'ingénierie associé à l'environnement d'ingénierie multi-utilisateur.

6. Procédé selon la revendication 1, comprenant en outre :
l'extraction, par l'unité de traitement (202), d'une action utilisateur du flux de travaux généré ;
la détermination, par l'unité de traitement (202), d'un compte d'actions utilisateur dans la pluralité d'actions utilisateur qui sont similaires à l'action utilisateur extraite ;
la détermination, par l'unité de traitement (202), que le compte déterminé d'actions utilisateur est inférieur à un seuil ; et
le retrait, par l'unité de traitement (202), de l'action utilisateur du flux de travaux généré, sur la base de la détermination que le compte déterminé d'actions utilisateur est inférieur au seuil.

7. Procédé selon la revendication 1, comprenant en outre :
la réception, par l'unité de traitement (202), d'une demande utilisateur d'exécuter le flux de travaux généré dans l'environnement d'ingénierie multi-utilisateur, dans lequel le programme d'ingénierie est généré sur la base de la demande utilisateur reçue.

8. Procédé selon la revendication 1, comprenant en outre :
la réception, par l'unité de traitement (202), d'une action utilisateur réalisée par l'utilisateur dans l'environnement d'ingénierie multi-utilisateur ;
la détermination, par l'unité de traitement (202), d'un compte d'actions utilisateur dans la pluralité d'actions utilisateur qui sont similaires à l'action utilisateur ;
la comparaison, par l'unité de traitement (202), du compte déterminé d'action utilisateur à un seuil ;
la détermination, par l'unité de traitement (202), que l'action utilisateur est une aberrance, sur la base de la comparaison ; et
l'entraînement, par l'unité de traitement (202), du modèle d'intelligence artificielle pour générer un autre flux de travaux pour le profil utilisateur déterminé de l'utilisateur, dans lequel le modèle d'intelligence artificielle est entraîné sur la base de la détermination que l'action utilisateur est l'aberrance, et l'autre flux de travaux généré comprend action utilisateur.

9. Procédé selon la revendication 1, comprenant en outre la génération, par l'unité de traitement (202), d'une pluralité de groupes d'actions utilisateur, parmi la pluralité d'actions utilisateur, sur la base de l'application de l'algorithme d'apprentissage non supervisé sur la pluralité d'actions utilisateur, dans lequel chaque groupe d'actions utilisateur de la pluralité de groupes d'actions utilisateur représente un flux de travaux logique spécifique.

10. Procédé selon la revendication 1, comprenant en outre l'entraînement d'un modèle d'intelligence artificielle pour générer le flux de travaux qui est spécifique à chaque profil utilisateur de la pluralité de profils utilisateur (108A-N), sur la base de l'analyse de la pluralité de groupes d'actions utilisateur de la pluralité d'utilisateurs, dans lequel le flux de travaux généré pour chaque profil utilisateur de la pluralité de profils utilisateur (108A-N) comprend au moins un groupe d'actions utilisateur associées au profil utilisateur particulier.

11. Système d'ingénierie (102) pour génération d'un programme d'ingénierie qui est spécifique à chaque utilisateur d'une pluralité d'utilisateurs dans un environnement d'ingénierie multi-utilisateur, dans lequel le système d'ingénierie comprend :
une ou plusieurs unités de traitement (202) ; et
une mémoire (204) couplée à l'une ou aux plusieurs unités de traitement (202), dans lequel la mémoire comprend un module d'automatisation (112) stocké sous la forme d'instructions lisibles par machine, qui, lorsqu'elles sont exécutées par l'une ou les plusieurs unités de traitement (202), amènent l'une ou les plusieurs unités de traitement (202) à réaliser les étapes du procédé selon l'une quelconque des revendications 1 à 10.

12. Environnement d'ingénierie (100), comprenant :
un système d'ingénierie (102) tel que revendiqué dans la revendication 11 ;
une installation technique (106) comprenant un ou plusieurs composants physiques ; et
un ou plusieurs dispositifs client (120A-N) couplés en communication au système d'ingénierie (102) par l'intermédiaire d'un réseau (104).

13. Produit programme d'ordinateur, ayant des instructions lisibles par machine stockées dans celui-ci, qui, lorsqu'elles sont exécutées par une unité de traitement (202), amènent l'unité de traitement (202) à réaliser un procédé selon de quelconques des revendications 1 à 10.
